# FASCICULE DE BREVET EUROPEEN

(11) **EP 0 767 082 B1**
(45) Date de publication et mention de la délivrance du brevet: **10.03.1999**
(21) Numéro de dépôt: 96402024.2
(22) Date de dépôt: 24.09.1996
(51) Int. Cl.: B60J 5/06, E05D 15/10

(54) **Dispositif de protection d'un rail d'une porte coulissante d'un véhicule automobile**
Schutzvorrichtung für Schiebetürschiene eines Motorfahrzeuges
Protection device for the rail of a sliding door of a motor vehicle

(30) Priorité: 02.10.1995 FR 9511569
(43) Date de publication de la demande: 09.04.1997
(73) Titulaire: AUTOMOBILES PEUGEOT, 75116 Paris (FR); AUTOMOBILES CITROEN, 92200 Neuilly-sur-Seine (FR)
(72) Inventeur: Jamilloux, Olivier, 78540 Vernouillet (FR)
(74) Mandataire: Lanceplaine, Jean-Claude

(56) Documents cités:
- EP-A- 0 357 542
- EP-A- 0 544 582
- DE-A- 1 655 788
- FR-A- 2 234 444
- US-A- 4 934 023

## Description

La présente invention a pour objet un dispositif de protection d'un rail d'une porte coulissante d'un véhicule automobile.

Certains véhicules automobiles sont équipés de portes montées coulissantes le long d'un panneau, par exemple latéral arrière du véhicule, de façon à dégager complètement l'accès aux places arrières de ce véhicule.

A cet effet, les portes coulissantes comportent au moins un chariot qui est monté déplaçable sur un rail horizontal entre une première position dans laquelle la porte est fermée et une seconde position dans laquelle la porte est ouverte.

Le rail longitudinal de guidage du chariot est, en général, fixé dans une rainure horizontale ménagée dans ladite caisse du véhicule. Dans ce cas, il fait apparaître une rupture de la continuité de la surface de ce panneau, particulièrement inesthétique.

L'invention a pour but d'éviter cet inconvénient en proposant un dispositif de protection d'un rail de guidage d'une porte coulissante qui permet de masquer la rainure créée par l'implantation de ce rail sur la caisse de ce véhicule et d'obtenir une plus grande homogénéité dans l'aspect général dudit véhicule.

L'invention a donc pour objet un dispositif de protection d'un rail d'une porte coulissante d'un véhicule automobile, ledit rail étant implanté dans une rainure horizontale ménagée dans la caisse du véhicule et coopérant avec des organes de déplacement de la porte, mobiles le long dudit rail lors du coulissement de cette porte entre une position d'ouverture et une position de fermeture (Dispositif de protection du type révélé, par exemple, par FR-A-2 234 444 ou EP-A-0 544 582), caractérisé en ce qu'il comprend un volet monté dans la rainure et pivotant par lesdits organes de déplacement de la porte entre une position sensiblement horizontale découvrant la rainure dans la position d'ouverture de la porte et une position sensiblement verticale obturant ladite rainure dans la position de fermeture de cette porte.

Selon des modes de réalisation de l'invention :
- le volet est monté pivotant sur au moins un axe porté par une patte fixée sur la caisse du véhicule à l'intérieur de la rainure,
- le volet est rappelé en position sensiblement verticale par au moins un élément élastique disposé sur ledit axe,
- ledit élément élastique est constitué par un ressort,
- le bord inférieur de la rainure est pourvu de butées de maintien du volet en position sensiblement verticale affleurant la caisse du véhicule,
- les organes de déplacement de la porte comportent au moins un pion destiné à coopérer avec la face interne du volet pour déplacer ledit volet entre sa position sensiblement verticale et sa position sensiblement horizontale.

Les caractéristiques et avantages de l'invention apparaîtront au cours de la description qui va suivre, donnée uniquement à titre d'exemple et faite en référence aux dessins annexés, sur lesquels :
- la figure 1 est une vue partielle en perspective montrant l'arrière d'un véhicule automobile équipé d'un dispositif de protection d'un rail d'une porte coulissante, conforme à l'invention,
- la figure 2 est une vue schématique à plus grande échelle du dispositif de protection conforme à l'invention,
- la figure 3 est une vue en coupe transversale des organes de déplacement de la porte coulissante et du dispositif de protection selon l'invention,
- la figure 4 est une vue schématique en coupe selon la ligne 3-3 de la figure 2,
- les figures 5 à 7 sont des vues schématiques de dessus montrant la cinématique de la porte coulissante entre sa position de fermeture et sa position d'ouverture.

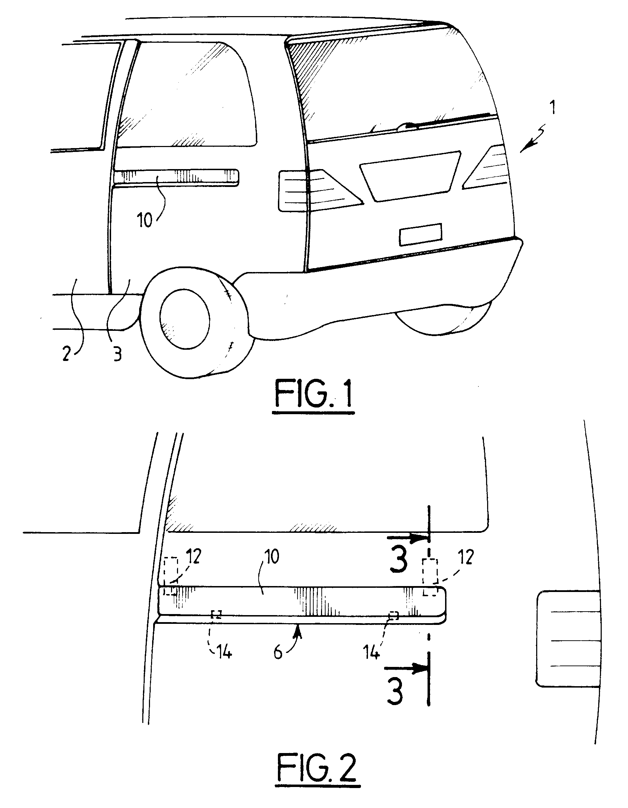

Sur la figure 1, on a représenté schématiquement la partie arrière d'un véhicule automobile 1 muni de deux portes arrière 2 coulissant parallèlement à la direction longitudinale du véhicule 1 le long des panneaux latéraux arrière 3 de la caisse du véhicule automobile 1.

Sur la figure 1, on a représenté partiellement une seule porte arrière 2, l'autre porte arrière étant identique.

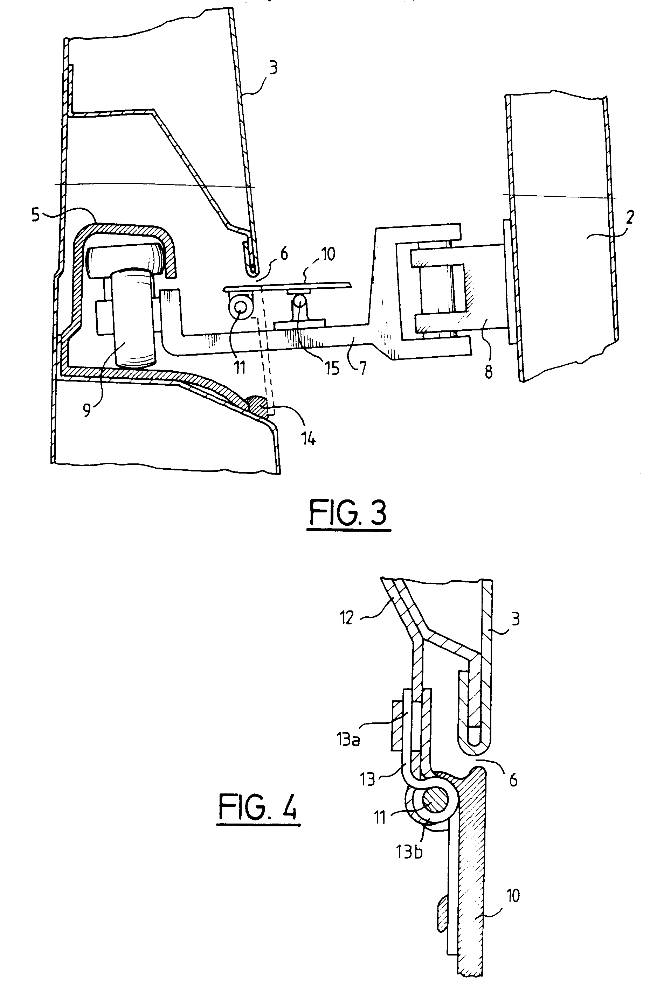

Ainsi que représenté plus particulièrement sur la figure 3, la porte arrière 2 est montée coulissante sur un rail 5 implanté dans une rainure horizontale 6 ménagée dans le panneau arrière 3 de la caisse du véhicule automobile 1.

Pour permettre le déplacement de la porte 2 entre une position d'ouverture et une position de fermeture, cette porte 2 est équipée de bras de support 7 solidaires de la dite porte par un chariot 8 et pourvus à leur extrémité opposée à celle reliée à cette porte 2, de rouleaux 9 coopérant avec le rail 5 de manière à guider ladite porte 2 lors de son déplacement le long du panneau latéral arrière 3 du véhicule.

Pour masquer le rail 5, le véhicule automobile est équipé d'un dispositif de protection de ce rail qui se compose d'un volet 10 monté dans la rainure 6 pivotant entre une position sensiblement horizontale (figure 4) découvrant la rainure 6 dans la position d'ouverture de la porte et une position sensiblement verticale (figure 3) obturant ladite rainure 6 dans la position de fermeture de cette porte 2.

Comme représenté sur les figures 2 à 4, le volet 10 est monté pivotant sur deux axes 11 disposés à chaque extrémité dudit volet 10. Chaque axe 11 est porté par une patte 12 fixée sur la face interne du panneau arrière 3 du véhicule automobile 1, c'est à dire à l'intérieur de la rainure 6.

Le volet 10 est rappelé en position sensiblement verticale par un élément élastique constitué par exemple par un ressort 13 monté sur chaque axe 11. Chaque ressort 13 a une première extrémité 13a solidaire de la patte 12 correspondante et une seconde extrémité 13b solidaire de l'axe 11 correspondant.

Comme cela apparaît à la figure 3, le bord inférieur de la rainure 6 est pourvu de butées 14, par exemple en caoutchouc, qui maintiennent le volet 10 en position sensiblement verticale affleurant le panneau arrière 3 de la caisse du véhicule automobile 1.

Le pivotement du volet 10 entre sa position sensiblement verticale et sa position sensiblement horizontale est assurée par au moins un pion 15 porté par des organes 7 de déplacement de la porte 2. Ce pion 15 est par exemple en matière plastique.

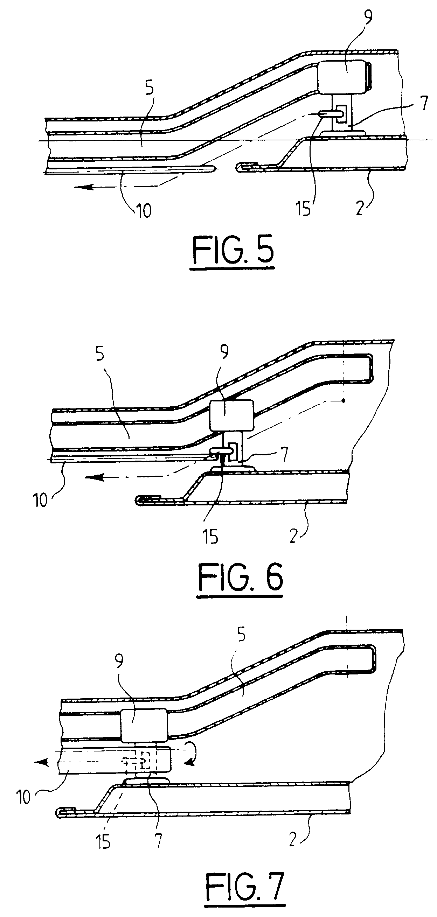

Comme représenté à la figure 5, lorsque la porte 2 est fermée, le volet 10 se trouve en position sensiblement verticale et est maintenu dans cette position par les ressorts 13, le bord inférieur du volet 10 étant en appui sur les butées 14.

Ainsi, le volet 10 masque le rail 5.

Au moment de l'ouverture de la porte 2, les rouleaux 9 roulent sur le rail 5 et le doigt 15 vient en appui sur la face interne du volet 10 ce qui provoque le basculement de ce volet 10 autour des axes 11 pour le passage des organes de déplacement 7 de la porte 2, comme représenté sur les figures 6 et 7.

Lorsque la porte 2 est refermée, les ressorts 13 ramènent le volet 10 dans sa position sensiblement verticale affleurant le panneau 3 de la caisse du véhicule automobile 1.

Le dispositif selon l'invention permet donc de masquer l'ouverture créée par l'implantation d'un rail de guidage d'une porte coulissante d'un véhicule automobile et d'avoir une plus grande homogénéité dans l'aspect général avec un volet de la couleur de la caisse de ce véhicule.

## Revendications

1. Dispositif de protection d'un rail (5) d'une porte coulissante (2) d'un véhicule automobile (1), ledit rail (5) étant implanté dans une rainure horizontale (6) ménagée dans la caisse du véhicule (1) et coopérant avec des organes (7) de déplacement de la porte (2), mobiles le long dudit rail (5) lors du coulissement de cette porte (2) entre une position d'ouverture et une position de fermeture, caractérisé en ce qu'il comprend un volet (10) monté dans la rainure (6) et pivotant par lesdits organes (7) de déplacement de la porte (2) entre une position sensiblement horizontale découvrant la rainure (6) dans la position d'ouverture de la porte (2) et une position sensiblement verticale obturant ladite rainure (6) dans la position de fermeture de cette porte (2).

2. Dispositif selon la revendication 1, caractérisé en ce que le volet (10) est monté pivotant sur au moins un axe (11) porté par une patte (12) fixée sur la caisse du véhicule (1) à l'intérieur de la rainure (6).

3. Dispositif selon les revendications 1 et 2, caractérisé en ce que le volet (10) est rappelé en position sensiblement verticale par au moins un élément élastique (13) disposé sur ledit axe (11).

4. Dispositif selon la revendication 3, caractérisé en ce que ledit élément élastique est constitué par un ressort (13).

5. Dispositif selon la revendication 1, caractérisé en ce que le bord inférieur de la rainure (6) comporte des butées (14) de maintien du volet (10) en position sensiblement verticale affleurant la caisse du véhicule (1).

6. Dispositif selon la revendication 1, caractérisé en ce que les organes (7) de déplacement de la porte (2) comportent au moins un pion (15) destiné à coopérer avec la face interne du volet (10) pour déplacer ledit volet (10) entre sa position sensiblement verticale et sa position sensiblement horizontale.

## Claims

1. A device for protecting a rail (5) of a sliding door (2) of a motor vehicle (1), the said rail (5) being mounted in a horizontal groove (6) recessed in the body of the vehicle (1) and co-operating with means (7) for moving the door (2), which means are movable along the said rail (5) when the said door (2) slides between an open position and a closed position, characterised in that the said device comprises a flap (10) which is mounted in the groove (6) and which, by the said means (7) for moving the door (2), pivots between a substantially horizontal position exposing the groove (6) when the door (2) is in the open position and a substantially vertical position closing the said groove (6) when the said door (2) is in the closed position.

2. A device as claimed in claim 1, characterised in that the flap (10) is mounted so as to pivot on at least one pin (11) held by a lug (12) attached to the body of the vehicle (1) inside the groove (6).

3. A device as claimed in claims 1 and 2, characterised in that the flap (10) is returned to a substantially vertical position by at least one resilient member (13) disposed on the said pin (11).

4. A device as claimed in claim 3, characterised in that the said resilient member comprises a spring (13).

5. A device as claimed in claim 1, characterised in that the lower edge of the groove (6) comprises catches (14) for holding the flap (10) in a substantially vertical position flush with the body of the vehicle (1).

6. A device as claimed in claim 1, characterised in that the means (7) for moving the door (2) comprise at least one pawn-shaped member (15) designed to co-operate with the interior face of the flap (10) for the purpose of moving the said flap (10) between its substantially vertical position and its substantially horizontal position.

## Patentansprüche

1. Schutzvorrichtung für eine Schiene (5) einer Schiebetür (2) eines Kraftfahrzeugs (1), wobei die Schiene (5) in eine im Aufbau des Fahrzeugs (1) ausgebildete horizontale Rinne (6) eingesetzt ist und mit Versetzungseinrichtungen (7) für die Tür (2), welche längs der Schiene (5) beim Gleiten dieer Tür (2) zwischen einer offenen Stellung und einer Schließstellung beweglich sind, zusammenwirkt, dadurch gekennzeichnet, daß sie eine in der Rinne (6) angebrachte Klappe (10) aufweist, welche durch die Verstzungseinrichtungen (7) der Tür (2) zwischen einer die Rinne (6) in der Öffnungsstellung der Tür (2) freilegenden im wesentlichen horizontalen Stellung und einer die Rinne (6) in der Schließstellung der Tür (2) verschließenden im wesentlichen vertikalen Stellung schwenkbar ist.

2. Vorrichtung nach Anspruch 1, dadurch gekennzeichnet, daß die Klappe (10) auf wenigstens einer Achse (11) schwenkbar angebracht ist, welche von einem am Aufbau des Fahrzeugs (1) innerhalb der Rinne (6) befestigten Lappen (12) getragen wird.

3. Vorrichtung nach den Ansprüchen 1 und 2, dadurch gekennzeichnet, daß die Klappe (10) durch wenigstens ein auf der Achse (11) angeordnetes elastisches Element (13) in die im wesentlichen vertikale Stellung zurückgeholt wird.

4. Vorrichtung nach Anspruch 3, dadurch gekennzeichnet, daß das elastische Element durch eine Feder (13) gebildet ist.

5. Vorrichtung nach Anspruch 1, dadurch gekennzeichnet, daß der untere Rand der Rinne (6) Anschläge (14) zum Halten der Klappe (10) in mit dem Aufbau des Fahrzeugs (1) abschließender im wesentlichen vertikaler Stellung aufweist.

6. Vorrichtung nach Anspruch 1, dadurch gekennzeichnet, daß die Versetzungseinrichtungen (7) für die Tür (2) mindestens einen Ansatz (15) für ein Zusammenwirken mit der Innenseite der Klappe (10) zum Versetzen der Klappe (10) zwischen ihrer im wesentlichen vertikalen und ihrer im wesentlichen horizontalen Stellung aufweisen.
